# EUROPÄISCHE PATENTANMELDUNG

(11) **EP 2 578 279 A1**
(43) Veröffentlichungstag der Anmeldung: **10.04.2013**
(21) Anmeldenummer: 10852590.8
(22) Anmeldetag: 28.07.2010
(51) Int. Cl.: A63F 13/00, A63F 9/00, A63H 33/22, G02B 27/22

(54) **SPIELSYSTEM**

(30) Priorität: 04.06.2010 RU 2010122916
(71) Anmelder: Tyasto, Denis Borisovich, St.Petersburg 192171 (RU)
(72) Erfinder: VASILIEV, Stanislav Viktorovich, St.Petersburg 196128 (RU)
(74) Vertreter: Gulde Hengelhaupt Ziebig & Schneider
(86) Internationale Anmeldenummer: PCT/RU2010/000418
(87) Internationale Veröffentlichungsnummer: WO 2011/152748

(57) **Zusammenfassung**

Die Erfindung betrifft die Spielvorrichtungen mit sich bewegenden Spielelementen. In dem Spielsystem gibt es ein Bedienpult 1, ausgestattet mit dem Empfänger- und Sendeblock 3, die in dem Spielraum beweglich angeordneten steuerbaren Spielelemente 2, die die echten und/oder ausgedachten beweglichen Objekte simulieren, jedes Spielelement ist mit einer Videokamera 6 mit dem Mittel zur Übertragung eines Signals (Block 4 Empfänger- und Sendeblock-Wandler) zu dem Visualisierungsmittel 16 ausgestattet. Die Spielelemente 2 sind mit den Mitteln 8, 10, 12 zur mechanischen und/oder elektrischen und/oder Welleneinwirkung auf jeweils andere Spielelemente 2, die das System umfasst, ausgestattet. Das Visualisiorungsmittel 16 für das Signal von der Videokamera 6 ist in Form von einem oder zwei LED-Bildschirmen ausgeführt, die auf dem Kopf des Spielteilnehmers mit der Möglichkeit der Schließung des Sichtfeldes von einem oder beiden Augen befestigt sind. Die Spielelemente 2 sind mit der Vorrichtung 14 zur Laserlenkung mit dem Antrieb 15 der Mittel 8, 10, 12 der mechanischen und/oder elektrischen und/oder jeweils Welleneinwirkung ausgestattet. Die Videokameras 6, die Mittel 8, 10, 12 der mechanischen und/oder elektrischen und/oder jeweils Welleneinwirkung sind jeweils mit den Antrieben 7, 9, 11, 13 mit der Sicherstellung der Möglichkeit der Drehung in beiden zueinander senkrechten Ebenen ausgestattet. Das System ist zusätzlich mit dem Handhabegerät 17 mit dem Gyrogeber ausgestattet, der mit dem Antrieb 7 der Videokamera 6, den Antrieben 9, 11, 13 der Mittel 8, 10, 12 zur Einwirkung und mit dem Antrieb 15 der Vorrichtung 14 zur Laserlenkung zusammenwirken. Das Handhabegerät 17 ist mit der Möglichkeit der Befestigung auf dem Kopf des Spielteilnehmers ausgeführt, dabei sind die Antriebe 7, 9, 11, 13, 15 synchronisiert. Die Spielelemente 2 sind mit dem Empfänger der Tonschwingungen - dem Mikrofon 5 - ausgestattet. Das Mittel zur Übertragung des Signals vom Mikrofon 5 auf das Pult 1 ist der Block 4. Die Spielelemente sind mit den Gebern ausgestattet, die die mechanische und/oder elektrische und/oder Welleneinwirkung fixieren. Es wird der visuelle Effekt der unmittelbaren Anwesenheit des Spielteilnehmers in dem Spielraum sichergestellt; es wird auch die Möglichkeit zur Änderung der Blickrichtung des Spielelementes (der Videokameraachse) auch auf natürliche Weise für reale Bedingungen sichergestellt: durch Drehen nach linkes - nach rechts, nach oben - nach unten des Kopfes und/oder des Rumpfs des Spielenden bei der Sicherstellung der synchronen abgestimmten Änderung der Richtung von Einwirkungsmitteln und der Vorrichtung zur Laserlenkung.

## Beschreibung

### Technikbereich

Die Erfindung betrifft Spielvorrichtungen mit sich bewegenden Spielelementen.

### Stand der Technik

Es ist ein System zur Durchführung der Spiele, die Schießkämpfe simulieren, umfassend einen auf den Spieler anzubringenden Waffensimulator, ausgeführt auf Grundlage eines Laserstrahlers, der den Laserstrahl als Simulation des Trefffaktors verwendet, und ein Scheibenspieler, der einen elektronischen Block mit Laserbestrahlungsempfänger und einen Indikator der "Schädigungen" umfasst, bekannt; in dem Waffensimulator wurde als Laserstrahles die Blockausführung des Strahlers eingesetzt, die in einem Gehäuse einen kompakten Laserhalbleiterstrahler mit den Vorrichtungen zur Frequenzmodulation und Formung des Laserstrahls sowie dem zusätzlich eingeführten Visier umfasst, ferner sind in die Vorrichtung zusätzlich aufgenommen: ein Strahlersteuerblock, der die Optimierung des Versorgungsbetriebs vom Halbleiterstrahler sicherstellt und die Signale zur Modulation und Bearbeitung der Laserbestrahlung für die Übergabe von Informationsvariablen der Bestandteile generiert, ein Block zur Auswahl des "Waffen"-Typs für die Vorgabe von Informationsparametern für den Strahlersteuerblock, ein Block zur Verzögerung oder Abschaltung der Strahlung zur Simulation von Spielmodi "verwendet" oder "getötet", RU 9400 U1.

Ein Nachteil dieses Systems besteht in dem äußerst hohen Komplikationsgrad, sowie in der fehlenden echten Wechselwirkung zwischen dem Spieler und der Scheibe. Das Treffen der Scheibe wird simuliert, was die emotionale Prägnanz des Spiels reduziert.

Es ist ein Spielsystem bekannt, das zumindest ein Bedienpult und die in dem Spielraum angeordneten Scheiben, wobei jede davon ein Mittel zum Erhalten der Signale von dem Bedienpult, ein Mittel zum Abschießen der Munition, einen Geber des Scheibentreffens und ein damit verbundenes Mittel zur Schädigungssimulation aufweist, umfasst; die Scheiben sind als Kriegsmaschinen, z. B., Panzer und/oder Flugzeuge und/oder Schiffe, die sich selbstständig in dem Spielraum bewegen können und mit der Möglichkeit der Fernsteuerung vom Bedienpult ausgeführt sind, ausgeführt, dabei weist jede Kriegsmaschine ein Mittel zur Simulation des Scheibentreffens durch die Munition, das mit dem Geber des Scheibentreffens verbunden ist, auf, RU 2002103091 A.

Ein Nachteil dieses Spielsystems besteht in dem Umstand, dass die Spielelemente nur passive Zielscheiben sind. Die Zielscheiben sind als Kriegsmaschinen ausgeführt, aber sie können keine weiteren Kriegsmaschinen treffen, was die Situation des echten Kampfes verzerrt. Das Spielsystems sieht ferner nur die Simulation des Zielscheibentreffens und nicht ihr echtes Treffen vor, was wesentlich die Spannungs- und Anziehungskraft des Spielsystems herabsenkt.

Es ist ein Spielsystem bekannt, das ein Bedienpult, ausgestattet mit dem Empfänger-Sende-Block, die in dem Spielraum beweglich angeordneten steuerbaren Spielelemente, die die echten und/oder ausgedachten beweglichen Objekte: Menschen und/oder Tiere usw. simulieren, aufweist; jedes Spielelement ist mit einer Videokamera mit dem Mittel zur Übertragung eines Signals von der Kamera zum Visualisierungsmittel - dem Bildschirm des Bedienpults - ausgestattet; die Spielelemente sind mit den Mitteln zur mechanischen und/oder elektrischen und/oder Welleneinwirkung auf die anderen Spielelemente, die dem System gehören, ausgestattet, RU39498 U1.

Diese technische Lösung diente als Prototyp für die vorliegende Erfindung.

Dieses System stellt die Möglichkeit der Wechselwirkung zwischen den Spielelementen sicher, inklusive deren Einwirkung aufeinander bis zur echten Schädigung, sowie erlaubt es, den Kreis der eingesetzten Spielelemente zu erweitern.

Ein Nachteil des Prototyps besteht darin, dass bei dem Spielteilnehmer kein Gefühl der unmittelbaren Anwesenheit auf dem Spielfeld entsteht, der Spielteilnehmer ist ein Beobachter am Rande, der alles Geschehende auf dem Bildschirm des Bedienpults sieht; ferner steuert der Spielteilnehmer alle Funktionen des Spielelements, inklusive seine Bewegung in dem Spielraum und Wechselwirkung mit anderen Spielelementen, nur manuell und nur vom Bedienpult. Um die Blockrichtung der Videokamera zu ändern, gibt der Bediener entsprechende Befehle von dem Pult ab und verfolgt dann das Ergebnis auf dem Bildschirm. Unter der Bedingung der sich ständig bewegenden Spielelemente ist eine solche Verfolgung dieser auf dem Bildschirmdisplay des Pults nur mit Hilfe der manuellen Steuerung ziemlich schwierig.

### Offenbarung der Erfindung

Die Aufgabe dieser Erfindung besteht in der Sicherstellung des visuellen Effekts der unmittelbaren Anwesenheit des Spielteilnehmers in dem Spielraum; die Aufgabe der Sicherstellung der Möglichkeit zur Änderung der Blickrichtung des Spielelementes (der Videokameraachse) wird auch auf natürliche Weise für reale Bedingungen gelöst: durch Drehen nach links - nach rechts, nach oben - nach unten des Kopfes und/oder des Rumpfs des Spielenden bei der Sicherstellung der synchronen abgestimmten Änderung der Richtung von Einwirkungsmitieln.

Erfindungsgemäß ist in dem Spielsystem, das ein Bedienpult, ausgestattet mit dem Empfänger- und Sendeblock, die in dem Spielraum beweglich angeordneten steuerbaren Spielelemente, die die echten und/oder ausgedachten beweglichen Objekte simulieren, wobei jedes davon mit einer Videokamera mit dem Mittel zur Übertragung eines Signals von der Videokamera zu dem Visualisierungsmittel ausgestattet ist, sowie mit den Mitteln zur mechanischen und/oder elektrischen und/oder Welleneinwirkung auf die anderen Spielelemente, die dem System gehören, umfasst, das Mittel zur Übertragung eines Signals von der Videokamera zu dem Visualisierungsmittel in Form von einem oder zwei LED-Bildschirmen, die auf dem Kopf des Spielteilnehmers mit der Möglichkeit der Schließung des Sichtfeldes von einem oder beiden Augen befestigt sind, ausgeführt; die Spielelemente sind mit der Vorrichtung zur Laserlenkung mit dem Antrieb der Mittel zur mechanischen und/oder elektrischen und/oder jeweils Welleneinwirkung ausgestattet; die Videokameras, die Mittel der mechanischen und/oder elektrischen und/oder jeweils Welleneinwirkung sind mit den Antrieben mit der Sicherstellung der Möglichkeit der Drehung in beiden zueinander senkrechten Ebenen ausgestattet, das System ist mit dem Handhabegerät mit dem Gyrogeber ausgestattet, der mit den Antrieben der Videokameras, dem Mittel zur Einwirkung und der Vorrichtung zur Laserlenkung zusammenwirkt, das Handhabegerät ist mit der Möglichkeit der Befestigung auf dem Kopf des Spielteilnehmers ausgeführt, dabei sind die Antriebe der Videokamera und der Einwirkungsmittel synchronisiert; die Spielelemente sind mit dem Empfänger der Tonschwingungen und dem Mittel zur Übertragung des Signals von diesem Empfänger auf das Bedienpult ausgestattet; die Spielelemente sind mit den Gebern ausgestattet, die die mechanische und/oder elektrische und/oder Welleneinwirkung fixieren.

Der Antragsteller hat keine technischen Lösungen ausfindig gemacht, die mit der vorliegenden Erfindung identisch sind. Das gestattet die Folgerung, dass diese dem Kriterium "Neuheit" (N) entspricht.

Die Umsetzung der kennzeichnenden Merkmale der Erfindung sichert das wichtige technische Ergebnis, das in der Sicherstellung des visuellen Effekts der unmittelbaren Anwesenheit des Spielteilnehmers in dem Spielraum und der Teilnahme an dem realen Kampf oder an einem anderen Prozess, der mit der Bewegung und Zusammenwirkung verbunden ist, besteht, dabei üben die unmittelbaren Kampfteilnehmer - die Spielelemente - eine reale physische und nicht eine virtuelle oder simulierte Einwirkung aufeinander aus. Der Effekt der unmittelbaren Anwesenheit wird durch die natürliche Änderung der Blickrichtung von Videokameras, der Einwirkungsmittel und der Laserlenkung durch Änderung der Lage des Kopfes und/oder des Rumpfs des Spielenden verstärkt.

Dem Antragsteller sind keine Informationsquellen bekannt, die die Informationen über den Einfluss der vorgeschlagenen kennzeichnenden Merkmale auf das infolge deren Umsetzung zu erreichende technische Ergebnis enthalten, was, der Meinung des Anmelders nach, die Entsprechung der Erfindung dem Kriterium "Erfindungshöhe" ("IS") bedingt.

### Kurzbeschreibung der Zeichnungen

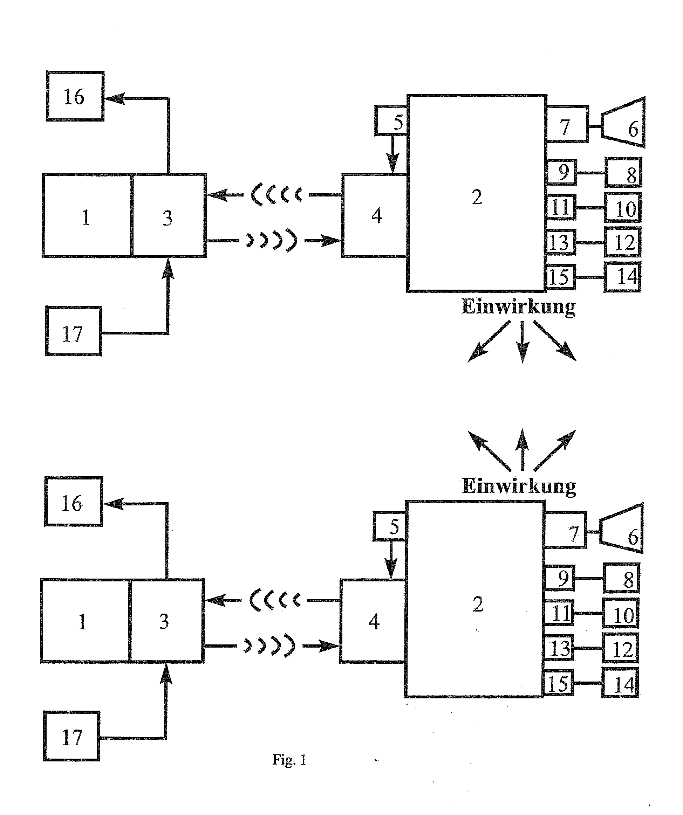

Nachfolgend wird die Erfindung durch eine detaillierte Beschreibung der Beispiele ihrer Ausführung mit Hinweisen auf die Zeichnung, die das Schema des Spielsystems zeigt, erklärt.

### Beste Variante der Ausführung der Erfindung

In dem konkreten Beispiel umfasst das Spielsystem zwei Bedienpulte 1 und zwei Spielelemente 2, die die realen und/oder ausgedachten beweglichen Objekte simulieren; jedes Bedienpult 1 steuert die Bewegung des entsprechenden Spielelementes 2 und seine Einwirkung auf andere Spielelemente 2. In diesem Beispiel wird das Spielelement 2 als Panzermaschine betrachtet. Jedes Bedienpult 1 ist mit einem Empfänger-Sendeblock 3 ausgestattet, der die elektromagnetische Signale empfangen und senden kann. Jedes Spielelement 2 weist einen Empfänger-Sendeblock-Wandler 4, einen Empfänger der Tonschwingungen - Mikrofon 5 - und eine Videokamera 6 mit dem Antrieb 7 auf Der Block 4 ist ein Mittel zur Übertragung des Signals von dem Mikrofon 5 und der Videokamera 6 zu dem Visualisierungsmittel 16 über den Block 3. Die Signale von der Videokamera 6 und dem Mikrofon 5 werden auf die Blöcke 4 übertragen, wo sie in die elektromagnetischen Signale umgewandelt werden, welche von den Blöcken 3 empfangen werden. Jedes Spielelement 2 ist mit einem Mittel 8 mit dem Antrieb 9 zur mechanischen Einwirkung auf das andere Spielelement 2 - in diesem Beispiel mit einer Schießwaffe - sowie mit dem Mittel 10 mit dem Antrieb 11 zur elektrischen Einwirkung - in diesem Beispiel - mit dem Generator der elektrischen Niederspannungsimpulse, z. B., mit dem Generator der Funkstörungen, sowie mit der Vorrichtung 14 zur Laserlenkung mit dem Antrieb 15 ausgestattet. Jedes Spielelement 2 kann mit den Gebern ausgestattet werden, die die mechanische und/oder elektrische und/oder Welleneinwirkung (auf der Zeichnung nicht gezeigt) fixieren. Das Visualisierungsmittel 16 für das Signal von der Videokamera 6 ist in Form von einem oder zwei LED-Bildschirmen ausgeführt, die auf dem Kopf des Spielteilnehmers mit der Möglichkeit der Schließung des Sichtfeldes von einem oder beiden Augen befestigt sind. Die LED-Bildschirme können z. B. in die Brillenfassung oder in den Helm montiert werden. Falls nur ein Bildschirm eingesetzt wird, sieht der Spielteilnehmer mit einem Auge das reale Bild des Spielraums von der eigenen Höhe aus und mit dem anderen Auge sieht er die Darstellung der Situation in dem Spielraum von dem Übersichtspunkt, der sich auf dem Spielelement 2 befindet. Falls zwei Bildschirme eingesetzt werden, die das Sichtfeld der beiden Augen decken, sieht der Spielteilnehmer das ganze Geschehen in dem Spielraum nur von dem Übersichtspunkt auf dem Spielelement 2.

Die Antriebe der Videokamera, der Einwirkungsmittel und der Vorrichtung zur Laserlenkung sind synchronisiert und ermöglichen die Drehung in der vertikalen Ebene in Bezug auf die horizontale Achse (gemäß dem Längsneigungswinkel) und in Bezug auf die vertikale Achse (gemäß dem Gierwinkel).

Das System ist mit dem Handhabegerät 17 mit dem Gyrogeber, verbunden mit dem Empfänger-Sendeblock 3 ausgestattet. Das Handhabegerät kann auf dem Kopf des Spielteilnehmers durch seine Zusammenbringung mit der Brillenfassung mit LED-Bildschirmen oder mit dem Helm befestigt werden. In dem konkreten Beispiel wurde das Handhabegerät des Typs G-Pad Pro, Fabrikat eDimensional (USA) (mit dem Gyrogeber) eingesetzt; es kann auch LED-Brille Vuzix AV230 (tragbare Bildschirme) oder «Cyberhelm» eMagin Z800 3D Visor (USA) eingesetzt werden.

Das Spielsystem funktioniert folgenderweise. Die Spielteilnehmer steuern mittels der Pulte 1 die Bewegung der Spielelemente 2 und geben die Befehle an die Einwirkungsmittel 8, 10, 12 zur Ausübung der jeweils mechanischen, elektrischen, Welleneinwirkung ab. Die Blöcke 3 strahlen dabei die Steuersignale aus, die der Block 4 empfängt, in dem sie in die Signale umgewandelt werden, welche die Bewegung der Spielelemente 2 in dem Spielraum sowie deren Einwirkung aufeinander sicherstellen.

Die Videokameras 6 nehmen das Geschehen in dem Spielraum von dem Übersichtspunkt auf dem gesteuerten Objekt - dem Spielelement 2 - auf und wandeln das optische Bild in die elektrischen Signale um, die in dem Block 4 ankommen. Nach der Verstärkung und Umwandlung in die elektromagnetischen Schwingungen wird das Signal in den Block 3 übertragen und wird nach der Umwandlung auf den LED-Bildschirmen des Visualisierungsmittels 16 angezeigt. Ähnlicherweise kommen in den Block 4 die Signale von dem Empfänger 5 der Tonschwingungen (dem Mikrofon), die nach der Verstärkung und Umwandlung in die elektromagnetischen Schwingungen in den Block 3 übertragen werden, wo sie in die Tonschwingungen umgewandelt werden, die mittels den Kopfhörern oder den Lautsprechern wiedergegeben werden. Auf solche Weise sieht der Bediener-Spielteilnehmer das Bild des Geschehens in dem Spielraum aus dem Objekt - dem Spielelement 2 - das er steuert (First Person View-FPV). Dabei entsteht das vollständige Gefühl der Anwesenheit, es entsteht ein so genannter "Avatar-Effekt", der Spielteilnehmer fusioniert sozusagen mit dem gesteuerten Objekt.

Zur Änderung der Blickrichtung der Videokamera dreht und/oder neigt der Spielende den Kopf und/oder Rumpf so, wie es unter den realen Bedingungen geschieht. Die Signale von dem Handhabegerät 17 mit dem Gyrogeber kommen in den Block 3, der die Steuersignale ausstrahlt, die der Block 4 empfängt, und die in die Signale umgewandelt werden, welche auf die Antriebe 7, 9, 11, 13, 15 wirken und die synchrone abgestimmte Änderung der Lage von Mitteln 8, 10, 12 der Einwirkung sowie die Änderung der Richtung des Laserstrahls von der Vorrichtung 15 der Laserlenkung sichern. Nach der Lenkung des Laserstrahls auf das Ziel mittels des Pults 1 wird der Befehl abgegeben, der die Mittel der mechanischen und/oder elektrischen und/oder Welleneinwirkung betätigt.

Die mechanische Einwirkung des einen Spielelementes 2 auf ein anderes kann zu der realen mechanischen Schädigung des letzten führen. Bei der elektrischen Einwirkung können das Spielelement oder seine Hauptbauteile ausfallen. Die Welleneinwirkung kann zu Störungen führen, infolge deren das Spielelement sich nicht mehr bewegen, die Informationen empfangen und absenden und eine bestimmte Einwirkung auf ein anderes Spielelement ausüben kann; das Ergebnis der einen oder der anderen Einwirkung kann mittels den entsprechenden Gebern bestimmt werden.

Das Spielsystem stellt den Effekt der unmittelbaren Anwesenheit in dem Spielraum und der Teilnahme an dem realen Kampf oder einem anderen Prozess dar, der mit der Bewegung und Wechselwirkung verbunden ist, dabei üben die unmittelbaren Kampfteilnehmer - die Spielelemente - eine reale physische, aber keine virtuelle oder simulierte Einwirkung aufeinander aus. Das vergrößert wesentlich das Interesse an dem Spiel, macht den Spielprozess spannender. Dabei wird der physische und Immaterialschaden, der mit den realen Kämpfen verbunden ist, ausgeschlossen. Der Effekt der unmittelbaren Anwesenheit wird durch die natürliche Änderung der Blickrichtung von Videokameras, der Einwirkungsmittel und Laserlenkung durch Änderung der Lage des Kopfes und/oder des Körpers des Spielenden verstärkt.

### Industrielle Anwendbarkeit

Für die Umsetzung des Spielsystems werden bekannte Materialien und Ausrüstungen verwendet, der Zusammenbau und die Regelung des Systems erfolgen unter den Werks- oder Laborbedingungen, was, der Meinung des Anmelders nach, die Entsprechung der Erfindung dem Kriterium "Industrielle Anwendbarkeit" (IA) bedingt.

### Liste der Bezugszeichen auf der Zeichnung

1 - Bedienpult
2 - Spielelement
3 - Empfänger- und Sendeblock
4 - Empfänger- und Sendeblock-Wandler
5 - Mikrofon
6 - Videokamera
7 - Antrieb der Videokamera
8 - Mittel der mechanischen Einwirkung
9 - Antrieb des Mittels der mechanischen Einwirkung
10 - Mittel der elektrischen Einwirkung
11 - Antrieb des Mittels der elektrischen Einwirkung
12 - Mittel der Welleneinwirkung
13 - Antrieb des Mittels der Welleneinwirkung
14 - Vorrichtung zur Laserlenkung
15 - Antrieb der Vorrichtung zur Laserlenkung
16 - Visualisierungsmittel des Videokamerasignals
17 - Handhabevorrichtung

## Patentansprüche

1. Spielsystem, das ein Bedienpult, ausgestattet mit dem Empfänger- und Sendeblock, die in dem Spielraum beweglich angeordneten steuerbaren Spielelemente, die die echten und/oder ausgedachten beweglichen Objekte simulieren, wobei jedes davon mit einer Videokamera mit dem Mittel zur Übertragung eines Signals von der Videokamera zu dem Visualisierungsmittel ausgestattet ist, sowie mit den Mitteln zur mechanischen und/oder elektrischen und/oder Welleneinwirkung auf die anderen Spielelemente, die dem System gehören, umfasst, **dadurch gekennzeichnet, dass** das Visualisierungsmittel für das Signal von der Videokamera in Form von einem oder zwei LED-Bildschirmen ausgeführt ist, die auf dem Kopf des Spielteilnehmers mit der Möglichkeit der Schließung des Sichtfeldes von einem oder beiden Augen befestigt sind.

2. Spielsystem nach Anspruch 1, **dadurch gekennzeichnet, dass** die Spielelemente mit der Vorrichtung zur Laserlenkung der Mittel der mechanischen und/oder elektrischen und/oder jeweils Welleneinwirkung, ausgestattet mit dem Antrieb, ausgestattet sind.

3. Spielsystem nach Anspruch 1, **dadurch gekennzeichnet, dass** die Videokameras, die Mittel der mechanischen und/oder elektrischen und/oder Welleneinwirkung mit den Antrieben mit der Sicherstellung der Möglichkeit der Drehung in beiden zueinander senkrechten Ebenen ausgestattet sind, das System zusätzlich mit dem Handhabegerät mit dem Gyrogeber ausgestattet ist, der mit den Antrieben der Videokameras, der Mittel zur Einwirkung und der Vorrichtung zur Laserlenkung zusammenwirkt, das Handhabegerät mit der Möglichkeit der Befestigung auf dem Kopf des Spielteilnehmers ausgeführt ist, dabei sind die Antriebe der Videokamera und der Einwirkungsmzttel und der Vorrichtung zur Laserlenkung synchronisiert.

4. Spielsystem nach Anspruch 1, **dadurch gekennzeichnet, dass** die Spielelemente mit dem Empfänger der Tonschwingungen und dem Mittel zur Übertragung des Signals von diesem Empfänger auf das Bedienpult ausgestattet sind.

5. Spielsystem nach Anspruch 1, **dadurch gekennzeichnet, dass** die Spielelemente mit den Gebern ausgestattet sind, die die mechanische und/oder elektrische und/oder Welleneinwirkung fixieren.
